# EUROPÄISCHE PATENTANMELDUNG

(11) **EP 1 482 131 A1**
(43) Veröffentlichungstag der Anmeldung: **01.12.2004**
(21) Anmeldenummer: 04012218.6
(22) Anmeldetag: 24.05.2004
(51) Int. Cl.: F01K 19/04

(54) **Dampfkraft-/Arbeitsprozess mit indirekter Energiezufuhr für die Elektroenergiegewinnung im Kreisprozess sowie Anordnung zu seiner Durchführung**

(30) Priorität: 24.05.2003 DE 10323937
(71) Anmelder: Rerum Cognitio, 08066 Zwickau (DE)
(72) Erfinder: Harazim, Wolfgang, 08060 Zwickau (DE)
(74) Vertreter: Auerbach, Bettina Patentanwältin

(57) **Zusammenfassung**

Dampfkraft-/Arbeitsprozeß mit indirekter Energiezufuhr für die Elektroenergiegewinnung im Kreisprozeß durch Kreislaufnutzung von Wasser in flüssiger und dampfförmiger Form als Arbeitsfluid und Kühlmittel im mehrstufigen Entspannungsprozeß sowie im damit verbundenen mehrstufigen Verdichtungsprozeß, bei dem der Arbeitsprozeß und der Kraftprozeß direkt kreislaufmäßig mit dem Kühlprozeß verbunden wird und der für die Kühlung benötigte Massestromanteil vom Gesamtmassestrom des Arbeitsfluids abgezweigt und kondensiert wird, wobei der kondensierte Masseteilstrom des Arbeitsfluids vollständig für Kühlzwecke in verschiedenen Prozeßstufen eingesetzt wird,
und die Antriebsenergie für den Kreisprozeß durch externe Verbrennung von brennbarem Material gewonnen wird,
und die gewonnene Antriebsenergie durch Überhitzung des Arbeitsfluids unmittelbar vor der Hochdruckturbinenstufe in den Dampfkraft-/Arbeitsprozeß eingeführt wird.

## Beschreibung

Die Erfindung betrifft einen Dampfkraft-/Arbeitsprozeß mit indirekter Energiezufuhr für die Elektroenergiegewinnung im Kreisprozeß durch Kreislaufnutzung von Wasser in flüssiger und dampfförmiger Form als Arbeitsfluid und Kühlmittel im mehrstufigen Entspannungsprozeß sowie im damit verbundenen mehrstufigen Verdichtungsprozeß. Hierbei wird der Arbeitsprozeß und der Kraftprozeß direkt kreislaufmäßig mit dem Kühlprozeß verbunden. Der für die Kühlung benötigte Massestromanteil wird vom Gesamtmassestrom des Arbeitsfluids abgezweigt und kondensiert, wobei der kondensierte Masseteilstrom des Arbeitsfluids vollständig für Kühlzwecke in verschiedenen Prozeßstufen eingesetzt wird. Derartige Verfahren und Anordnungen werden in erster Linie für die Elektroenergie- und Gebrauchswärmegewinnung benötigt.

Bei der Umwandlung von thermischer in mechanische Energie ist der Wirkungsgrad auf Maximalwerte begrenzt, die durch die Temperaturen der Verbrennung des bei der Verbrennung freigesetzten Abgases und der eingesetzten Kühlmittel bestimmt sind. Materialtechnische Grenzen in den angewendeten Energieumwandlungsprozessen beeinflussen die Differenz zwischen dem theoretisch erreichbaren und dem praktisch realisierten Wirkungsgrad nach dem jeweiligen Stand der Technik. Da die Turbomaschinenforschung bereits an einem sehr hohen Entwicklungsniveau angelangt ist, resultieren spürbare Verbesserungsmöglichkeiten im wesentlichen aus der Thermodynamik der Kreisprozesse.
Ausgehend von den maximalen Verbrennungstemperaturen müssen nach dem bisherigen Wissensstand die allgemeinen Temperaturen im Energieumwandlungsprozeß erhöht werden, um den Exergieanteil zu erhöhen.

Bei Einsatz fossiler Brennstoffe im Gasturbinenprozeß haben die hohen Verbrennungstemperaturen zudem Einfluß auf die Stickoxidemission. Großtechnisch haben sich zur Gewinnung von elektrischer Energie der Dampfturbinen-Clausius-Rankine-Kreisprozeß, der Gasturbinenkreisprozeß und der Gas- und Dampf- Kombiprozeß (GuD-Prozeß) als die Kombination von beiden Grundprozessen durchgesetzt. Mittels moderner Dampf-Kran-Prozesse sollen durch Druck- und Temperaturerhöhungen des Arbeitsfluids auf über 300 bar und über 700 °C die angestrebten Wirkungsgradverbesserungen erreicht werden. Dies setzt zugleich voraus, daß materialtechnische Lösungen für die Beherrschung dieser Prozeßparameter gefunden werden.
Mittels moderner Gasturbinenprozesse wird angestrebt, die Turbineneinsatztemperaturen auf über 1500 °C anzuheben und die Standfestigkeit des eingesetzten Materials durch adäquate technische Lösungen zur Maschinenkühlung zu erreichen.
In bekannten Gas- und Dampf- Kombiprozessen (GuD-Prozessen) profitiert man von den technischen Entwicklungen auf den Gebieten beider Grundprozesse. Im Bestreben, die angezielten Wirkungsgradverbesserungen bei der Energieumwandlung zu erreichen, wurde wiederholt versucht, Lösungen zu günstigeren Gestaltung der Energieumwandlungsprozesse durch Nutzung von Kreisprozessen zu finden.
Eine derartige technische Lösung wurde in der PCT/ DE 98/ 03617 bekannt gemacht. Gemäß dieser Lösung wird ausschließlich Wasserdampf als Arbeitsfluid im Kreisprozeß eingesetzt. Der mehrstufige Dampfkraft-/Arbeitsprozeß wird hierbei in an sich bekannter Weise durch direkte Kopplung eines mehrstufigen Turboverdichters mit einer mehrstufigen Gasturbine durchgeführt. Als Arbeitsfluid kommen im wesentlichen Wasserdampf und das dampfförmige Umsetzungsprodukt aus der Knallgasreaktion zum Einsatz. Die Energiezufuhr zum Prozeß erfolgt dabei durch die innere Verbrennung von Knallgas, wobei das aus der Knallgasreaktion resultierende zusätzliche wasserdampfförmige Arbeitsfluid direkt an der Beschaufelung der mehrstufigen Dampfturbine zum Einsatz gebracht wird.
Mit der DE 100 55 202 A1 wird die vorgenannte technische Lösung dadurch weiterentwickelt, daß das zur Kühlung in verschieden Stufen des Kreisprozesses benötigte Kühlmittel durch Kondensation eines Teilmassestroms des Arbeitsfluids gewonnen wird.

Neben indirekten Kühlprozessen wird das Kühlmittel an ausgewählten Punkten des Kreisprozesses auch direkt eingesetzt, so daß eine externe Bereitstellung von Arbeitsfluid und Kühlmittel nicht benötigt wird.

Die Nachteile des bekannten Standes der Technik bestehen insbesondere darin, daß die beachtlichen Wirkungsgradverbesserungen bei Anwendung der genannten Lösungen im wesentlichen nur dadurch erreicht werden können, daß Energieträger mit einer Eignung für die innere Verbrennung und mit Umsetzungsprodukten in der Qualität des genutzten Arbeitsfluids zum Einsatz gebracht werden müssen.

Die Aufgabe der Erfindung besteht deshalb im Schaffen einer technischen Lösung, mit deren Hilfe die Mängel des bekannten Standes der Technik überwunden werden können. Die zu entwickelnde technische Lösung soll es ermöglichen, den Dampfkran-/Arbeitsprozeß mit den ihm innewohnenden energetischen Vorteilen weiterhin nutzen zu können, ohne auf den Einsatz von Brennstoffen mit der Eignung für die innere Verbrennung angewiesen zu sein. Der Kreisprozeß soll weiterhin mit dem Arbeitsfluid Wasserdampf durchgeführt werden, ohne ihn durch die indirekte Energiezufuhr insbesondere hinsichtlich des energetischen Wirkungsgrades zu beeinträchtigen.

Die Aufgabe wird erfindungsgemäß durch die Merkmale der Ansprüche 1 und 5 gelöst. Die vorteilhaften Ausgestaltungen sind in den Unteransprüchen beschrieben.
Danach wird eine Dampfkraft-/Arbeitsprozeß durch die indirekte Energiezufuhr aufrechterhalten und für die Elektroenergiegewinnung im Kreisprozeß vorgesehen. Es wird Wasser in flüssiger und dampfförmiger Form als Arbeitsfluid und Kühlmittel im mehrstufigen Entspannungsprozeß sowie im damit verbundenen mehrstufigen Verdichtungsprozeß im Kreislauf genutzt. Der Arbeitsprozeß und der Kraftprozeß werden direkt kreislaufinäßig mit dem Kühlprozeß verbunden.

Der für die Kühlung benötigte Massestromanteil wird vom Gesamtmassestrom des Arbeitsfluid abgezweigt und kondensiert, wobei der kondensierte Masseteilstrom des Arbeitsfluids vollständig für Kühlzwecke in verschiedene Stufen des Kreisprozesses eingesetzt wird. Die Antriebsenergie für den Kreisprozeß wird durch externe Verbrennung von brennbarem Material gewonnen. Die gewonnene Antriebsenergie wird durch Überhitzung des Arbeitsfluids unmittelbar vor der Hochdruckturbinenstufe in den Dampfkraft-/Arbeitsprozeß eingeführt. Die Antriebsenergie wird dem Dampfkraft-/Arbeitsprozeß indirekt mittels Wärmeübertrager zugeführt.
Die vorgeschlagene technische Lösung ist dazu geeignet, den Kreisprozeß auf Wasserdampfbasis mit seinen energetischen und apparatetechnischen Vorteilen aufrechtzuerhalten, ohne die Qualität des Arbeitsfluids und damit zugleich des Kühlmittels zu beeinträchtigen. Eine Vermischung des Arbeitsfluids mit den Umsetzungsprodukten der eingesetzten Brennstoffe wird sicher ausgeschlossen. Gegenüber dem Einsatz von Brennstoffen für die innere Verbrennung wird in der vorgeschlagenen Lösung der Nachteil von Umwandlungsverlusten bei der externen Brennstoffumsetzung in Kauf genommen. Dafür werden die Anforderungen an die Qualität der Brennstoffe in entscheidendem Maße reduziert.
In einer besonderen Ausführungsform ist vorgesehen, als brennbares Material heizwertreiche oder heizwertarme fossile und/oder biogene Brennstoffe in fester, flüssiger oder gasförmiger Form einzusetzen. Damit erweitert sich das Spektrum einsetzbarer Brennstoffe gegenüber von Knallgas für die innere Verbrennung auf den Einsatz von schwerem bis leichtem Heizoel, fossile und biogene Gase sowie brennbare feste Stoffe jeglicher Art.
Insbesondere beim Einsatz von heizwertarmen Brennstoffen ist vorgesehen, bei der Energieumwandlung sauerstoffreiche Verbrennungsluft zum Einsatz zu bringen und damit einerseits den Energieumwandlungsprozeß energetisch effizienter zu gestalten und zugleich eine Stickoxidemissionsminderung zu erreichen.

Die Vorteile der vorgeschlagenen verfahrenstechnischen Lösung bestehen vor allem darin, daß der hocheffiziente Dampfkraft-/Arbeitsprozeß mit dem einheitlichen Arbeitsfluid Wasserdampf nun auch unabhängig von der Verfügbarkeit von solchen Brennstoffen durchgeführt werden kann, deren Umsetzungsprodukte ohne Qualitätsbeeinträchtigung mit dem Arbeitsfluid / mischbar sind. Damit läßt sich die Antriebsenergie für den Dampfkraft- Arbeitsprozeß auch aus der Umsetzung von Brennstoffen gewinnen, deren Umsatzungsprodukte eine praktisch beliebige Qualität aufweisen, da eine Vermischung mit dem Arbeitsfluid infolge der indirekten Energiezuführung sicher ausgeschlossen wird.

Die Anordnung für die Durchführung des Dampfkraft-/Arbeitsprozesses mit indirekter Energiezufuhr für die Elektroenergiegewinnung im Kreisprozeß sieht die direkte Kopplung einer mehrstufigen Dampfturbine mit einem mehrstufigen Turboverdichter sowie die Anordnung von Wärmetauschereinheiten im externen Leitungssystem für das Arbeitsfluid vor. Die der indirekten Energiezufuhr dienenden Wärmeübertragerflächen sind zwischen dem Regenerator und der Hochdruckstufe der mehrstufigen Dampfturbine angeordnet.
Der Vorteil der Erfindung besteht apparatetechnisch darin, daß als Wärmeübertrager für die indirekte Energiezufuhr praktisch erprobte Überhitzerflächen eingesetzt werden können, wie sie in modernen Kesselanlagen zu Einsatz kommen. Besondere Anforderungen an die Beschaufelung der Dampfturbine, wie sie im Falle der inneren Verbrennung erfüllt werden müßten, können unbeachtet bleiben.

Die Erfindung soll nachstehend mit Ausführungsbeispielen näher erläutert werden.
In der beigefügten Zeichnung zeigen
- Fig. 1: die schematische Darstellung des Dampfkraft- / Arbeitsprozesses mit indirekter Energiezufuhr und Niederdruckentspannung nach dem Regenerator;
- Fig. 2: die schematische Darstellung des Dampfkraft- / Arbeitsprozesses mit indirekter Energiezufuhr und Niederdruckentspannung vor dem Regenerator mit ausgewählten Prozeßparametem (reversibel);
- Fig. 3: die schematische Darstellung des Kreisprozesses mit Niederdruckentspannung vor dem Regenerator im Mollier-h-s-Diagramm;

### Ausführungsbeispiele

### Ausführungsbeispiel 1:

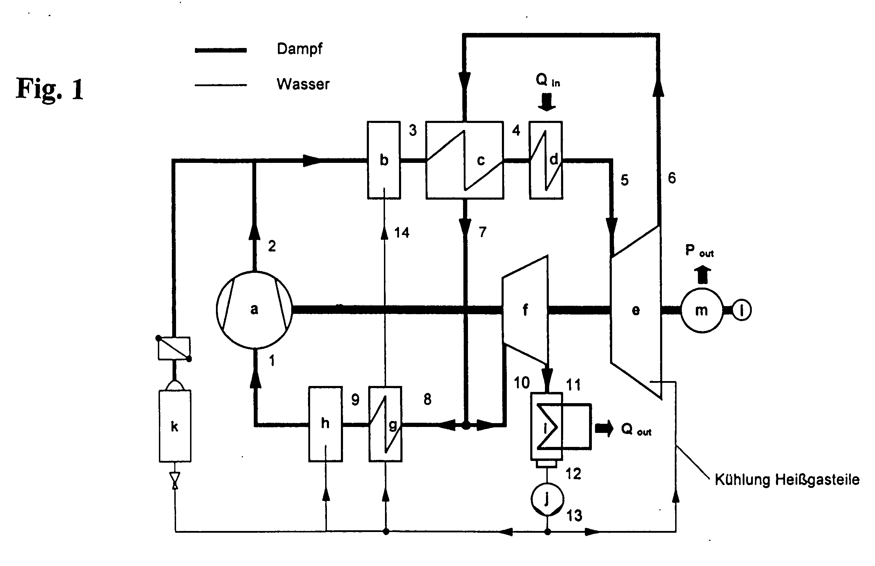

Gemäß der Figur 1 sowie Tabelle 1 wird ein Dampfkraft-/ Arbeitsprozeß mit indirekter Energiezufuhr und der Niederdruckentspannung nach dem Regenerator c durchgeführt. Damit kann eine größere Anwendungsbreite des bereits bekannten Dampfkraft- / Arbeitsprozesses erreicht werden, indem die Brennstoffpalette beispielsweise um Biomasse, Kohle bzw. Müll erweitert wird. Die indirekte Energiezufuhr erfolgt im Dampferhitzer d ohne Vermischung der bei der Verbrennung entstehenden Abgase mit dem Arbeitsfluid Wasserdampf. Die Verbrennungswärme wird durch Wärmeübertragerflächen auf das Arbeitsfluid übertragen. Die verbleibende Restwärme dient bedarfsweise zur Luft- bzw. Sauerstoff- und/oder Brennstoffvorwärmung.
Bevor der Prozeß beginnt, wird in der Arbeitsfluidadaptation k das Arbeitsfluid verdampft und das gesamte Anlagensystem befüllt und entlüftet. Diese funktionelle Nebenkomponente bleibt ohne direkten Einfluß auf den nachfolgenden zyklischen Prozeßablauf.
Der Turboverdichter a saugt unverdichteten gekühlten Wasserdampf 1 an und komprimiert ihn isentrop zum verdichteten Dampf 2. Im Dampfkühler b. wird Dampfkondensat zur Kühlung des verdichteten Dampfes 2 eingedüst, wodurch die Arbeitsfluidtemperatur isobar vom verdichteten Dampf 2 auf die Temperatur des verdichteten Sattdampfes 3 absinkt.

Unter Nutzung von niederdruckseitiger Abwärme erfolgt danach im Regenerator c eine isobare Erwärmung des verdichteten Sattdampfes 3 auf die Parameter des regenerierten Dampfes 4. Von externen Quellen zugeführte Wärmeenergie Qᵢₙ wird im Erhitzer d auf das Arbeitsfluid übertragen, wodurch die Temperatur des regenerierten Dampfes 2 auf die Temperatur des überhitzten Dampfes 5 steigt.
Nach der isentropen Entspannung in der Hochdruckturbine e vom überhitzten Dampf 5 auf entspannten Dampf 6 durchströmt das Arbeitsfluid die Niederdruckseite des Regenerators c und kühlt dabei vom Zustand des entspannten Dampfes 6 auf den Zustand des teilabgekühlten entspannten Dampfes 7 ab. Die Abzweigtrennung teilt den erforderlichen Kühlmassenstrom von der Arbeitsfluidgesamtmenge ab, so daß dieser zunächst in der Niederdruckturbine f vom Zustand des Teilstroms des teilabgekühlten entspannten Dampfes 10 in den Zustand des entspannten Dampfes 11 vor dem Kondensator i überführt wird. Danach wird der Kühlmassenstrom im Kondensator i vom Zustand des entspannten Dampfes 11 durch Wärmeabfuhr Qₒᵤₜ zum Dampfkondensat 12 verflüssigt und von der Pumpe j isentrop vom Zustand des Dampfkondensates 12 in den Zustand des Dampfkondensates 13 zur Kühlung der Hochdruckturbine e auf den erforderlichen Druckpegel gebracht.
Der Hauptmassenstrom des Dampfkondensates 13 passiert den Kondensatvorwärmer g und den Kühler h für den unverdichteten Dampf 1, wobei die Temperatur des Arbeitsfluids vom Zustand des Teilstroms des teilabgekühlten Dampfes 8 zunächst auf den Zustand des Teilstroms des teilabgekühlten Dampfes 9 nach dem Kondensatvorwärmers g und schließlich auf den Zustand des unverdichteten gekühlten Dampfes 1 isobar abgekühlt wird. Im Generator m erfolgt die Umwandlung der auskoppelbaren mechanischen Energie in elektrische Energie P_{out.}
Zum Starten der Turbomaschinengruppe dient ein Anwurfinotor 1.

**Tabelle 1:**

| Zustandskennwerte des Arbeitsfluids gemäß Beispiel 1 | | | | |
|---|---|---|---|---|
| Zustand | Druck bar | Temperatur °C | spez.Wärme kJ/kg | Massestrom kg/s |
| 1 | 1 | 99,60 | 2674,94 | 0,873 |
| 2 | 10 | 366,65 | 3193,52 | 0,837 |
| 3 | 10 | 179,88 | 2777,11 | 1,0 |
| 4 | 10 | 553,31 | 3595,36 | 1,0 |
| 5 | 10 | 1200,00 | 5148,75 | 1,0 |
| 6 | 1 | 676,25 | 3875,60 | 1,0 |
| 7 | 1 | 179,88 | 2835,74 | 0,7868 |
| 8 | 1 | 179,88 | 2835,74 | 0,7868 |
| 9 | 1 | 179,88 | 2835,74 | 0,7868 |
| 10 | 1 | 676,25 | 3875,60 | 1,0 |
| 11 | 0,056 | 229,00 | 2936,35 | 0,2131 |
| 12 | 0,056 | 35,00 | 2564,58 | 0,2131 |
| 13 | 55,00 | 150,71 | 638,43 | 0,2131 |
| 14 | 55,00 | 150,71 | 638,43 | 0,1629 |

### Ausführungsbeispiel 2:

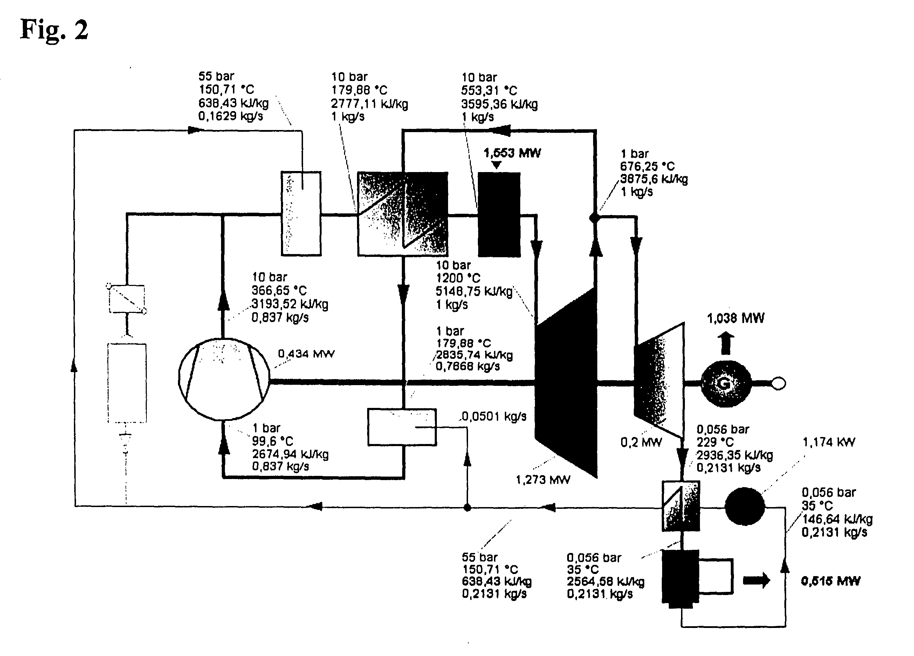

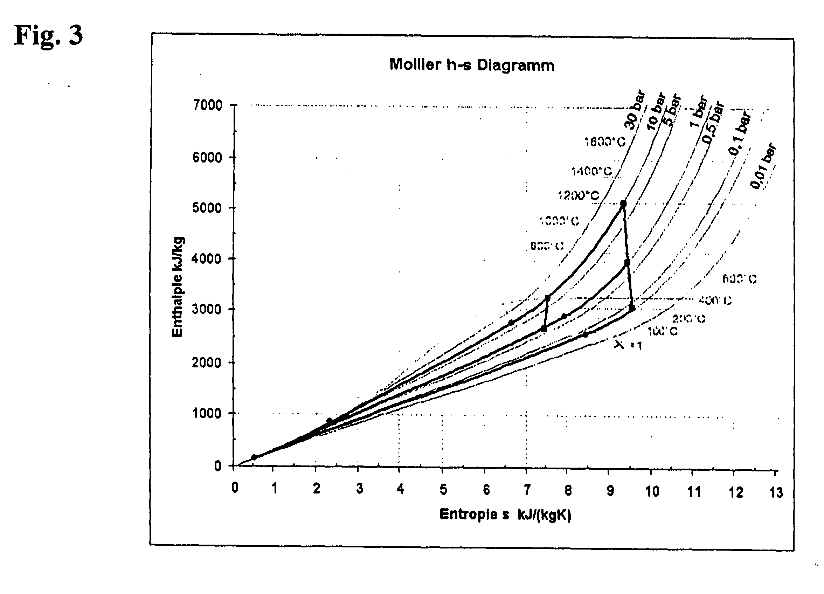

Gemäß der Figuren 2 und 3 sowie Tabelle 2 verläuft der Prozeß analog dem Ausführungsbeispiel 1, allerdings ist die Niederdruckentspannung nach dem Regenerator c vorgesehen.

**Tabelle 2:**

| Zustandskennwerte des Arbeitsfluids gemäß Beispiel 2 | | | | |
|---|---|---|---|---|
| Zustand | Druck bar | Temperatur °C | spez. Wärme kJ/kg | Massestrom kg/s |
| 1 | 1,0 | 99,60 | 2674,94 | 0,7974 |
| 2 | 10,0 | 366,65 | 3264,23 | 0,7974 |
| 3 | 9,99 | 179,83 | 2777,07 | 1,0 |
| 4 | 9,98 | 538,02 | 3561,86 | 1,0 |
| 5 | 9,88 | 1200,00 | 5148,78 | 1,0 |
| 6 | 1,02 | 726,70 | 3990,32 | 1,0 |
| 7 | 1,012 | 219,03 | 2913,06 | 0,7288 |
| 8 | 1,012 | 219,03 | 2913,06 | 0,7288 |
| 9 | 1,012 | 219,03 | 2913,06 | 0,7288 |
| 10 | 1,02 | 776,70 | 3990,32 | 1,0 |
| 11 | 0,056 | 307,44 | 3091.75 | 0,2711 |
| 12 | 0,056 | 35,00 | 2564,58 | 0,2711 |
| 13 | 66,00 | 201,10 | 859,41 | 0,2711 |
| 14 | 66,00 | 201,10 | 859,41 | 0,2025 |

### Bezugszeichenliste

- a: Turboverdichter
- b: Kühler für den verdichteten Dampf
- c: Regenerator
- d: Erhitzer
- e: Hochdruckturbine
- f: Niederdruckturbine
- g: Kondensatvorwärmer
- h: Kühler für den unverdichteten Dampf
- i: Kondensator
- j: Kondensatpumpe
- k: Arbeitsfluidadaptation
- l: Anwurfmotor
- m: Generator
- n: Welle
- 1: unverdichteter gekühlter Dampf
- 2: verdichteter Dampf
- 3: verdichteter Sattdampf
- 4: regenerierter Dampf
- 5: überhitzter Dampf
- 6: entspannter Dampf
- 7: teilabgekühlt entspannter Dampf
- 8: Teilstrom des teilabgekühlten Dampfesvor dem Kondensatvorwärmer g
- 9: Teilstrom des teilabgekühlten Dampfes nach dem Kondensatvorwärmer g
- 10: Teilstrom des teilabgekühlten entspannten Dampfes vorder Niederdruckturbine f
- 11: entspannter Dampf vor dem Kondensator i
- 12: Dampfkondensat
- 13: Dampfkondensat zur Kühlung der Hochdruckturbine e
- 14: Dampfkondensat zur Kühlung des verdichteten Dampfes 2

## Patentansprüche

1. Dampfkraft-/Arbeitsprozeß mit indirekter Energiezufuhr für die Elektroenergiegewinnung im Kreisprozeß durch Kreislaufnutzung von Wasser in flüssiger und dampfförmiger Form als Arbeitsfluid und Kühlmittel im mehrstufigen Entspannungsprozeß sowie im damit verbundenen mehrstufigen Verdichtungsprozeß, bei dem der Arbeitsprozeß und der Kraftprozeß direkt kreislaufmäßig mit dem Kühlprozeß verbunden wird und der für die Kühlung benötigte Massestromanteil vom Gesamtmassestrom des Arbeitsfluids abgezweigt und kondensiert wird, wobei der kondensierte Masseteilstrom des Arbeitsfluids vollständig für Kühlzwecke in verschiedenen Prozeßstufen eingesetzt wird, **dadurch gekennzeichnet,**
**daß** die Antriebsenergie für den Kreisprozeß durch externe Verbrennung von brennbarem Material gewonnen wird,
**daß** die gewonnene Antriebsenergie durch Überhitzung des Arbeitsfluids unmittelbar vor der Hochdruckturbinenstufe in den Dampfkraft-/Arbeitsprozeß eingeführt wird und
**daß** die Antriebsenergie indirekt mittels Wärmeübertrager dem Dampfkraft-/Arbeitsprozeß zugeführt wird.

2. Dampfkraft-/Arbeitsprozeß mit indirekter Energiezufuhr für die Elektroenergiegewinnung im Kreisprozeß nach dem Anspruch 1, **dadurch gekennzeichnet, daß** als brennbares Material heizwertreiche fossile und/oder biogene Brennstoffe in fester, flüssiger oder gasförmiger Form eingesetzt werden.

3. Dampfkran-/Arbeitsprozeß mit indirekter Energiezufuhr für die Elektroenergiegewinnung im Kreisprozeß nach dem Anspruch 1, **dadurch gekennzeichnet, daß** als brennbares Material heizwertarme fossile und/oder biogene Brennstoffe in fester, flüssiger oder gasförmiger Form eingesetzt werden.

4. Dampfkraft-/Arbeitsprozeß mit indirekter Energiezufuhr für die Elektroenergiegewinnung im Kreisprozeß nach dem Anspruch 1, **dadurch gekennzeichnet, daß** dem brennbaren Material bei der Verbrennung sauerstoffreiche Verbrennungsluft zugesetzt wird.

5. Anordnung zur Durchführung des Dampfkraft-/Arbeitsprozeß mit indirekter Energiezufuhr für die Elektroenergiegewinnung im Kreisprozeß durch direkte Kopplung einer mehrstufigen Dampfturbine (e, f) mit einem mehrstufigen Turboverdichter (a) und Anordnung von Wärmetauschereinheiten (b, c, d, g, h, i) im externen Leitungssystem für das Arbeitsfluid nach dem Anspruch 1, **dadurch gekennzeichnet, daß** die der indirekten Energiezufuhr dienenden Wärmeübertragerflächen zwischen dem Regenerator (c) und der Hochdruckstufe (e) der mehrstufigen Dampfturbine (e, f) angeordnet sind.
